Europäisches Patentamt

European Patent Office

Office européen des brevets

(11) Veröffentlichungsnummer: **0 343 461**
A1

## (12) EUROPÄISCHE PATENTANMELDUNG

(21) Anmeldenummer: 89108647.2

(22) Anmeldetag: 13.05.89

(51) Int. Cl.4: **A01D 69/00 , A01D 41/14**

(30) Priorität: 23.05.88 US 197473

(43) Veröffentlichungstag der Anmeldung:
29.11.89 Patentblatt 89/48

(84) Benannte Vertragsstaaten:
**BE DE FR IT**

(71) Anmelder: **DEERE & COMPANY**
**1 John Deere Road**
**Moline Illinois 61265(US)**

(72) Erfinder: **Love, Mahlon Lloyd**
**10 Pine Ridge Rural Route 4**
**Geneseo Illinois 61254(US)**

(74) Vertreter: **Feldmann, Bernhard**
**DEERE & COMPANY European Office, Patent**
**Department Steubenstrasse 36-42 Postfach**
**503**
**D-6800 Mannheim 1(DE)**

(54) Antriebsvorrichtung.

(57) Eine Antriebsvorrichtung mit einer Antriebswelle (42), die eine Umkehr der Drehrichtung einer Abtriebswelle (56) über eine Schaltvorrichtung ermöglicht, weist zwei Antriebsräder (44, 46) und zwei Abtriebsräder (48, 52) auf, die z. B. mittels Riemen (50, 54) untereinander stets antriebsmäßig verbunden sind. Eines der Abtriebsräder (52) ist achsparallel zu der Abtriebswelle (56) vorgesehen und kann mittels eines verschiebbaren Umkehrelements (58) in Antriebsverbindung mit der Abtriebswelle (56) gebracht werden.

Eine derartige Antriebsvorrichtung findet z. B. Anwendung an Einzugsorganen von Erntemaschinen.

F I G. 3

EP 0 343 461 A1

## Antriebsvorrichtung

Die Erfindung betrifft eine Antriebsvorrichtung mit einer Antriebswelle, einer in unterschiedliche Drehrichtungen antreibbaren Abtriebswelle und einem schaltbaren Umkehrelement.

Eine derartige bekannte Antriebsvorrichtung (US-A-4 218 864), die zur Reversierung der Drehrichtung eines Förderers in einem Schrägförderer eines Mähdreschers benutzt wird, enthält außer der Antriebs- und der Abtriebswelle ein Umkehrgetriebe mit einer Nebenwelle und zwei Kettengetrieben. Eine zu einem Schneidwerk führende Welle kann über eine Schaltvorrichtung mit der Abtriebswelle direkt oder mit dem Nebenwellengetriebe verbunden werden. Abhängig davon, ob die Welle mit dem Nebenwellengetriebe oder mit der Abtriebswelle verbunden wird, erfolgt der Antrieb in der einen oder der anderen Richtung.

Diese Antriebsvorrichtung ist insoweit nachteilig, als sie durch das Nebenwellengetriebe raumaufwendig baut, relativ viele Einzelteile enthält und eine mehrfache Antriebsumlenkung bewirkt, die sich auf den Momentenverlauf ungünstig auswirkt.

Eine in der DD-A-117 794 beschriebene Antriebsvorrichtung für denselben Zweck weist zur Umkehrung der Antriebsrichtung ein in einem Gehäuse untergebrachtes Zahnradgetriebe auf, das ebenfalls in seiner Herstellung aufwendig und teuer ist.

Andere Antriebsvorrichtungen sehen anstatt einer Umkehr des Antriebs vor, einen Motor anzuflanschen, der einen Antrieb in der anderen Richtung bewirkt und über Schaltmittel zugeschaltet wird, so z. B. gemäß der EP-A2-0 307 009 und US-A-4 663 919.

Die der Erfindung zugrunde liegende Aufgabe wird darin gesehen, eine vereinfachte Antriebsvorrichtung für zwei Drehrichtungen vorzuschlagen, die kostengünstig herzustellen und von robuster Bauweise ist.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise ist weder ein zusätzlicher Motor noch ein aufwendig gestaltetes Nebenwellengetriebe, das zur Überbrückung dient, erforderlich, um eine Antriebsrichtungsumkehr hervorzurufen. Es wird mit dem Umkehrelement lediglich zwischen den Ausgängen zweier stets angetriebener Getriebe gewählt.

Wenn das Umkehrelement in drehfester Verbindung mit der Abtriebswelle steht und koaxial auf dieser sitzt und wenn nur eines der Abtriebsräder achsparallel zu der Abtriebswelle angeordnet und mithin das andere Abtriebsrad koaxial zu der Abtriebswelle vorgesehen ist, wird das Antriebsmoment direkt in die Abtriebswelle eingeleitet, so daß geringst mögliche Torsionsmomente entstehen.

Die Ausbildung des Umkehrantriebs als Stirnradgetriebe erlaubt es, mit kurzen Schaltwegen zwischen zwei Schaltzuständen zu wählen und durch eine entsprechende Wahl der Durchmesser des betreffenden Abtriebsrads und eines Umkehrrads eine Übersetzungsänderung für den Antrieb in der anderen Richtung hervorzurufen. Eine Übersetzungsänderung ist durchaus sinnvoll, weil es zur Beseitigung einer Verstopfung in einem Förderer, der mittels der Antriebsvorrichtung angetrieben wird, nicht auf die Antriebsgeschwindigkeit, sondern auf ein hohes Antriebsmoment ankommt. Darüber hinaus verlaufen die Momente in einem Stirnradgetriebe in einer Ebene, so daß Torsionsmomente vermieden werden.

Die Umschaltung läßt sich mit einem einzigen Element anstatt einem Nebenwellengetriebe bewirken, wenn das Umkehrrad und eine mit der Abtriebswelle in Eingriff stehende Hülse mit Verzahnungen versehen sind, die in entsprechende Verzahnungen in den Abtriebsrädern eingreifen können.

Eine Verbindung, die durch eine Axialbewegung hergestellt oder unterbrochen werden kann, läßt sich durch jeweils stirnseitig oder im Stirnbereich angebrachte Zähne oder Innen- und Außenverzahnungen verwirklichen, die konzentrisch angeordnet sind und axial übereinander geschoben werden.

Eine einfach aufgebaute und dennoch robuste Schaltvorrichtung enthält zweckmäßigerweise ein als Zug-Druck-Kabel (Bowdenzug) ausgebildetes Gestänge, das eine flexible Anordnung des Schalthebels zu der Schaltgabel zuläßt, und eine stets in Eingriff mit dem Umkehrelement stehende Schaltgabel, die nur noch in die eine oder andere Richtung verschoben werden muß.

Die Verwendung der erfindungsgemäßen Antriebsvorrichtung an einem Förderer eines Mähdreschers oder Feldhäckslers, insbesondere an deren Schrägförderer bzw. Einzugsorganen, bietet ganz besondere Vorteile, weil es dadurch der Bedienungsperson erspart wird, bei Verstopfungen im Einzugsbereich von der Fahrerplattform abzusteigen. Grundsätzlich ist die Antriebsvorrichtung bei jedem Förderer dienlich, der einer Verstopfungsgefahr unterliegt.

In der Zeichnung ist ein nachfolgend näher beschriebenes Ausführungsbeispiel der Erfindung dargestellt. Es zeigt:

Fig. 1 einen Mähdrescher in Seitenansicht,

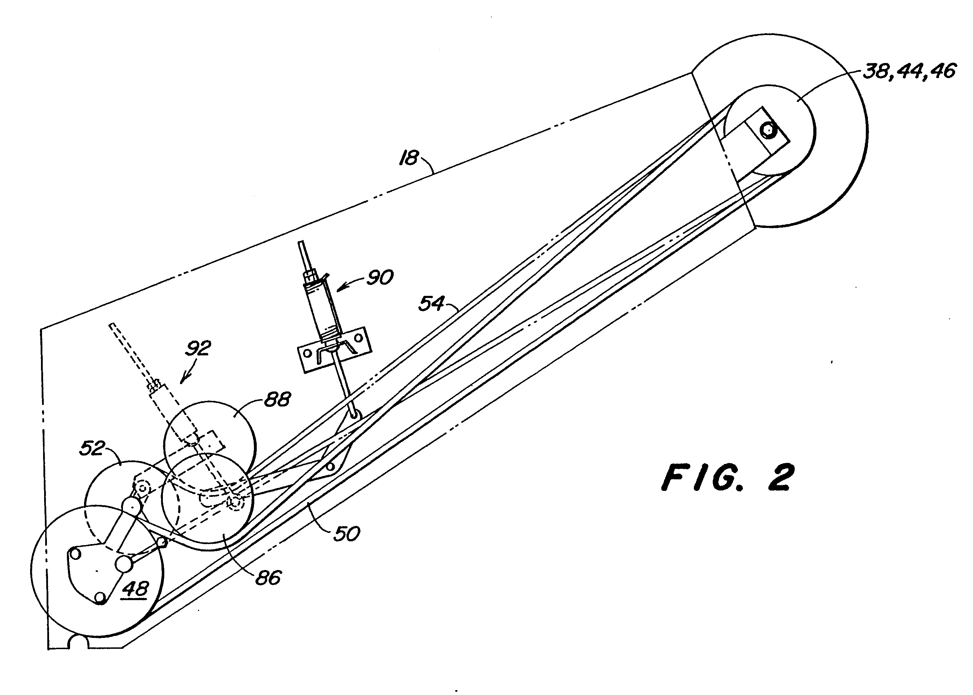

Fig. 2 ein Fördergehäuse des Mähdreschers aus Figur 1 mit einer erfindungsgemäßen Antriebsvorrichtung in Seitenansicht,

Fig. 3 eine schematische Darstellung der Antriebsvorrichtung in Draufsicht und

Fig. 4 die Antriebsvorrichtung in Draufsicht und im Schnitt.

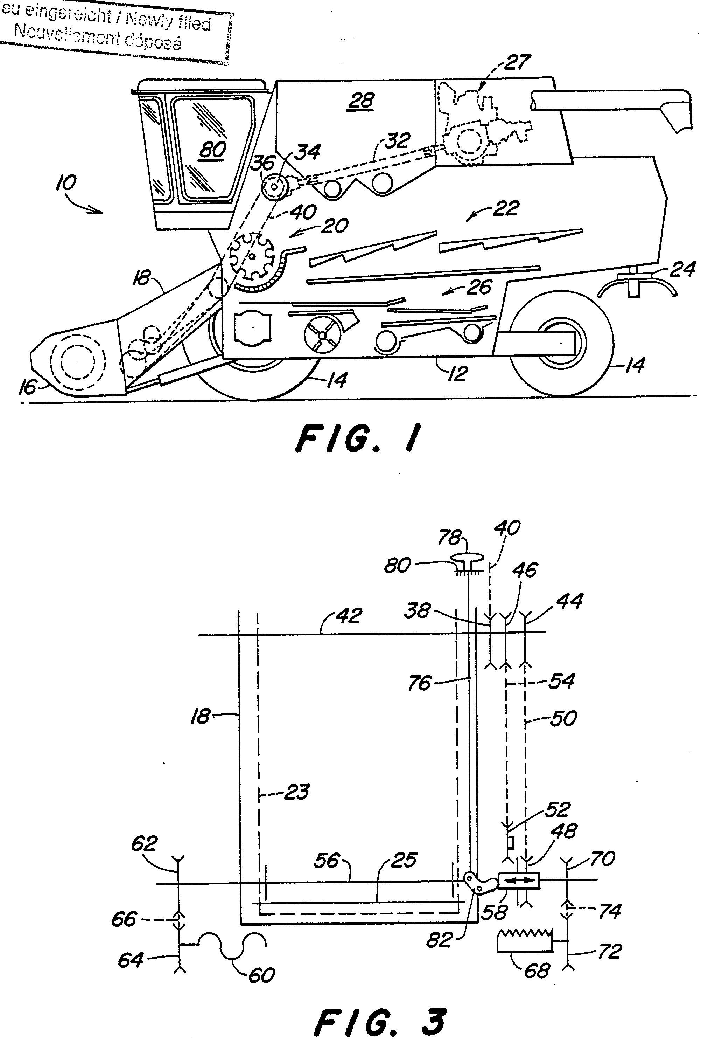

Ein in Figur 1 gezeigter Mähdrescher 10 weist einen Rahmen 12 auf, der sich mittels Rädern 14 auf dem Boden abstützt. Landwirtschaftliche Erntegüter werden mittels einer Erntevorrichtung 16 aufgenommen und von dort über ein Fördergehäuse 18 zu einer Drescheinheit 20 befördert. Die Drescheinheit 20 drischt das Erntegut aus und führt es einer Abscheidevorrichtung 22 zu, in der die Körner von dem Stroh abgesondert werden, während das Stroh einem Strohhäcksler oder einem Strohstreuer 24 zufließt. Die Körner, Kurzstroh und Kaff werden einer Reinigungseinrichtung 26 aufgegeben, die die Körner heraussiebt und das Kurzstroh wie das Kaff am rückwärtigen Ende des Mähdreschers 10 auswirft. Die abgesonderten Körner werden über einen nicht gezeigten Elevator einem Korntank 28 zugeführt, wo sie für eine gewisse Zeit gespeichert werden. Die verschiedenen Komponenten in dem Mähdrescher werden von einem Motor 27 angetrieben, wobei die Antriebsverbindungen ausführlich in der EP-A1-0 291 336 beschrieben sind.

In dem Fördergehäuse 18 ist normalerweise ein Förderer 23 untergebracht, der mehrere mit Förderleisten 25 bestückte Ketten besitzt, die das Erntegut entlang des Bodens des Fördergehäuses 18 zu der Drescheinheit 20 bewegen. Der Motor 27 leitet den Antrieb über eine in Vorwärtsrichtung nach unten geneigte Hauptantriebswelle 32 einer Querwelle 34 zu, auf die eine Scheibe 36 aufgesetzt ist. Die Scheibe 36 ist wiederum über einen Riemen 40 mit einer Scheibe 38 antriebsmäßig verbunden. Die angetriebene Scheibe 38 sitzt drehfest auf einer Antriebswelle 42, die sich quer durch den oberen Bereich des Fördergehäuses 18 erstreckt. Auf der Antriebswelle 42 ist darüber hinaus ein Antriebsrad 44 für den Hauptantrieb des Förderers 23 und ein Antriebsrad 46 für einen Umkehrantrieb montiert. Das Antriebsrad 44 ist mit einem Abtriebsrad 48 über einen Riemen 50 und das Antriebsrad 46 ist mit einem Abtriebsrad 52 über einen Riemen 54 verbunden. Die beiden Antriebsräder 44, 46, die Abtriebsräder 48 und 52 und die Riemen 50 und 54 sind somit Bestandteil jeweils eines Getriebes.

Der Ausgang der beiden Abtriebsräder 48 und 52 wird wahlweise einer Abtriebswelle 56 für den Antrieb des Förderers 23 über ein Umkehrelement 58 zugeführt. Die Abtriebswelle 56 dient auch dem Antrieb einer Förderschnecke 60 in der Erntevorrichtung 16, wozu eine Antriebsscheibe 62, eine angetriebene Scheibe 64 und ein Riemen 66 vorgesehen sind. Darüber hinaus wird von der Abtriebswelle 56 ein hin- und hergehendes Messer 68 der Erntevorrichtung 16 über eine Antriebsscheibe 70, eine angetriebene Scheibe 72 und einen Riemen 74 angetrieben.

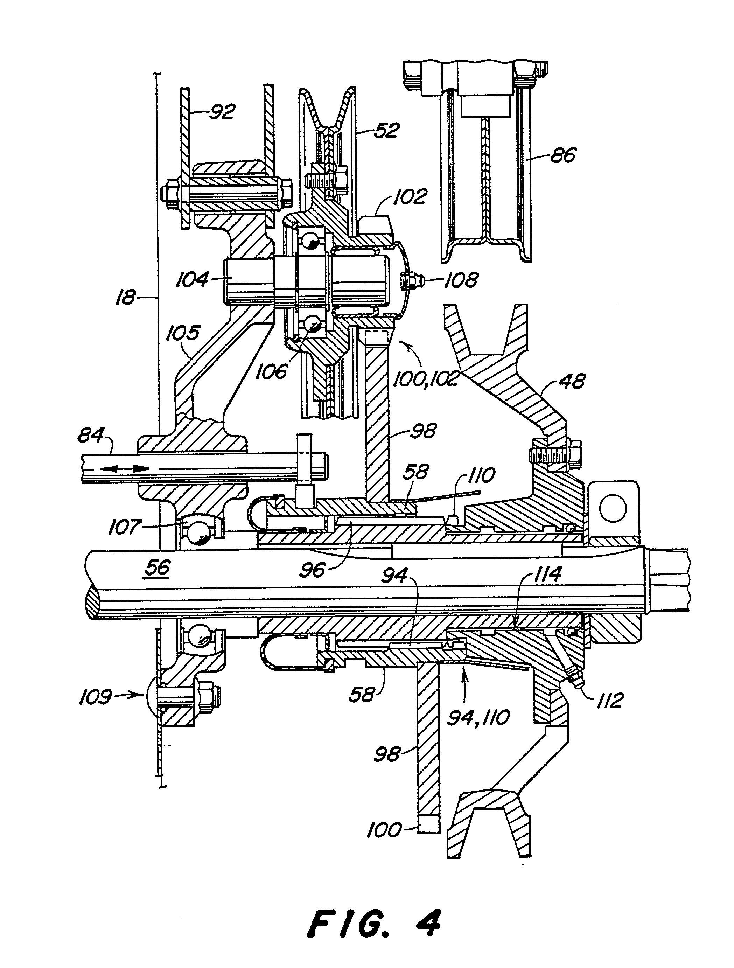

Das Umkehrelement 58 verbindet wahlweise eines der beiden Abtriebsräder 48 und 52 mit der Abtriebswelle 56. Die Stellung des Umkehrelements 58 wird über ein Gestänge 76, das als Bowdenzug ausgebildet sein kann, gesteuert, wobei das Gestänge 76 mittels eines in einer Fahrerkabine 80 angeordneten Schalthebels 78 bedient wird. Das Gestänge 76 ist mit einem Winkelhebel 82 verbunden, der über eine Schaltgabel 84 mit dem Umkehrelement 58 in Eingriff steht. Aus Figur 4 geht zudem hervor, daß die Riemen 50 und 54 von Spannrollen 86 und 88 beaufschlagt werden, die mittels Feder-Spannvorrichtungen 90, 92 an die Riemen 50, 54 angedrückt werden.

Figur 4 zeigt ferner, daß das Umkehrelement 58 zylindrisch ausgebildet ist und auf die Abtriebswelle 56 paßt. Die Wandung einer Innenbohrung des Umkehrelements 58 ist mit einer Innenverzahnung 94 versehen, die in Eingriff mit einer außenverzahnten Hülse 96 steht, die selbst wiederum dreh fest auf der Abtriebswelle 56 sitzt. Das Umkehrelement 58 ist mit einem Umkehrrad 98, das auf die Mantelfläche der Hülse 96 aufgebracht ist, versehen. Das Umkehrrad 98 trägt eine Außenverzahnung 100, die in der Art eines Stirnradgetriebes in eine Verzahnung 102 des Abtriebsrads 52 eingreift. Das Abtriebsrad 52 ist auf einer Achse 104 über ein Lager 106 drehbeweglich festgemacht, das mittels einer Schmiervorrichtung 108 geschmiert werden kann. Die Achse 104 erstreckt sich von einem Träger 105 fort, in dem die Abtriebswelle 56 mittels eines Lagers 107 drehbar aufgenommen ist. Um eine Schwenkbewegung des Trägers 105 um die Abtriebswelle 56 zu vermeiden, ist dieser über Befestigungsteile 109 an dem Fördergehäuse 18 gehalten.

In Figur 4 ist die Abtriebswelle 56 in zwei Zuständen gezeigt, die jeweils unterhalb und oberhalb ihrer Längsmittenachse dargestellt sind. In einer Anordnung ist das Umkehrelement 58 mit der einen, in der anderen Anordnung mit dem anderen Abtriebsrad 48 bzw. 52 in Verbindung stehend gezeigt. Wenn das Abtriebsrad 48 für die normale Drehrichtung mit dem Umkehrelement 58 in Eingriff stehen soll, greift die Innenverzahnung 94 in eine im Stirnbereich an dem Abtriebsrad 48 angebrachte Außenverzahnung 110 ein, wie dies aus der unteren Darstellung von Figur 4 hervorgeht. Infolge dieser Antriebsverbindung wird der Förderer 23 innerhalb des Fördergehäuses 18 in Vorwärtsrichtung angetrieben. Soll jedoch der Förderer 23 zur Beseitigung einer durch die übermäßige Aufnahme von Erntegut entstandenen Verstopfung in der Rückwärtsrichtung angetrieben werden, wird mittels der Schaltstange 84 das Umkehrelement 58 mit Blick auf Figur 4 nach links geschoben, so daß das Umkehrrad 98 in Eingriff gerät mit der Verzahnung 102 und die Abtriebswelle 56 in der umgekehrten Drehrichtung angetrieben werden kann.

Aus Figur 4 ist ferner zu entnehmen, daß die Abtriebsscheibe 48 auf der Abtriebswelle 56 bzw. der Hülse 96 lose drehbar gelagert ist und nicht mitgedreht wird, solange sie nicht mit dem Umkehrelement in Eingriff steht. An dem Abtriebsrad 48 ist ebenfalls eine Schmiervorrichtung 112 für ein Lager 114 vorgesehen, so daß dieses ausreichend geschmiert werden kann, um das Drehvermögen aufrechtzuerhalten.

Die Zähne der verschiedenen Verzahnungen sind angeschrägt, so daß das Umkehrelement 58 schnell und ohne großen Kraftaufwand sowohl mit dem einen als auch dem anderen Abtriebsrad 48, 52 in Eingriff geschoben werden kann. Während des Betriebs wird die quer verlaufende Antriebswelle 42 stets über die Scheibe 38 in Drehung versetzt, die selbst wieder die Abtriebsräder 48, 52 antreibt. Demzufolge werden die beiden Abtriebsräder 48, 52 stets in der gleichen Richtung angetrieben, und eine Umkehrung der Drehrichtung der Abtriebswelle 56 erfolgt nur durch eine Verschiebung des Umkehrelements 58 mit der Hülse 96 und dem Umkehrrad 98.

## Ansprüche

1. Antriebsvorrichtung mit einer Antriebswelle (42), einer in unterschiedliche Drehrichtungen antreibbaren Abtriebswelle (56) und einem schaltbaren Umkehrelement (58), gekennzeichnet durch zwei Antriebsräder (44, 46), die drehfest auf der Antriebswelle (42) sitzen, und zwei Abtriebsräder (48, 52), die jeweils in ständiger Antriebsverbindung mit den Antriebsrädern (44, 46) stehen, von denen eines zu der Abtriebswelle (56) achsparallel und das andere auf der Abtriebswelle (56) gelagert ist und die über das Umkehrelement (58) mit der Abtriebswelle (56) wahlweise in Eingriff bringbar sind.

2. Antriebsvorrichtung nach Anspruch 1, dadurch gekennzeichnet, daß das Umkehrelement (58) auf der Abtriebswelle (56) drehfest und koaxial angeordnet und zum Eingriff mit jeweils einem der Abtriebsräder (48, 52) axial beweglich ist.

3. Antriebsvorrichtung nach Anspruch 2, dadurch gekennzeichnet, daß das Umkehrelement (58) mit einem der Abtriebsräder (52) in der Art eines Stirnradgetriebes in Kämmeingriff bringbar ist.

4. Antriebsvorrichtung nach Anspruch 2 oder 3, dadurch gekennzeichnet, daß das Umkehrelement (58) mit dem anderen Abtriebsrad (48) durch eine Bewegung in axialer Richtung verbindbar ist.

5. Antriebsvorrichtung nach einem oder mehreren der vorherigen Ansprüche, dadurch gekennzeichnet, daß eine mit dem Umkehrelement (58) in Eingriff stehende Schaltgabel (84) über ein Gestänge (76) und einen Schalthebel (78) bewegbar ist.

6. Antriebsvorrichtung nach einem oder mehreren der vorherigen Ansprüche, dadurch gekennzeichnet, daß das Umkehrelement (58) aus einem Umkehrrad (98) und einer Hülse (96) besteht, die miteinander verbunden sind und jeweils eine Verzahnung (100, 94) zur Verbindung mit einer entsprechenden Verzahnung (102, 110) auf den Antriebsrädern (48, 52) aufweisen.

7. Verwendung einer Antriebsvorrichtung nach einem oder mehreren der vorherigen Ansprüche für den reversierbaren Antrieb eines Förderers (23) eines Mähdreschers (10) oder eines Feldhäckslers.

**FIG. 1**

**FIG. 3**

FIG. 2

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| X | FR-A-733234 (JEANTIN) <br> * Seite 1, Zeile 61 - Seite 2, Zeile 25; Figur 1 * | 1, 2, 4, 6 | A01D69/00 <br> A01D41/14 |
| | --- | | |
| A | US-A-4496105 (FLEMING) <br> * Spalte 5, Zeile 32 - Spalte 6, Zeile 36 * | 1, 2, 4-6 | |
| | --- | | |
| A,D | US-A-4218864 (ALLEMEERSCH) <br> * Spalte 5, Zeile 40 - Spalte 6, Zeile 49 * | 5, 7 | |
| | --- | | |
| A | FR-A-2534651 (INTERNATIONAL HARVESTER) <br> ----- | | |

**RECHERCHIERTE SACHGEBIETE (Int. Cl.4 )**

A01D
A01F

Der vorliegende Recherchenbericht wurde für alle Patentansprüche erstellt

| Recherchenort | Abschlußdatum der Recherche | Prüfer |
|---|---|---|
| DEN HAAG | 01 AUGUST 1989 | DE LAMEILLIEURE D. |